## Europäisches Patentamt
## European Patent Office
## Office européen des brevets

(19)

(11) Numéro de publication : **0 327 437 B1**

(12) **FASCICULE DE BREVET EUROPEEN**

(45) Date de publication du fascicule du brevet :
**22.01.92 Bulletin 92/04**

(21) Numéro de dépôt : **89400246.8**

(22) Date de dépôt : **30.01.89**

(51) Int. Cl.⁵ : **F16B 13/08**, E04G 23/02,
E04B 2/44, E04B 2/30

(54) **Cheville à expansion pour double maçonnerie.**

(30) Priorité : **02.02.88 FR 8801165**

(43) Date de publication de la demande :
**09.08.89 Bulletin 89/32**

(45) Mention de la délivrance du brevet :
**22.01.92 Bulletin 92/04**

(84) Etats contractants désignés :
**BE DE FR GB SE**

(56) Documents cités :
**EP-A- 0 166 455**
**BE-A- 882 234**
**DE-C- 812 008**
**US-A- 3 906 832**
**US-A- 4 633 638**

(73) Titulaire : **SOCIETE DE PROSPECTION ET
D'INVENTIONS TECHNIQUES SPIT
Route de Lyon
F-26501 Bourg-Les-Valence Cédex (FR)**

(72) Inventeur : **Barthomeuf, Jean-Paul
Alixan Le Village
26300 Bourg de Péage (FR)**
Inventeur : **Gallice, Daniel
21 Allée M. Nostradamus
26500 Bourg-Les-Valence (FR)**

(74) Mandataire : **Bloch, Gérard et al
2, square de l'Avenue du Bois
F-75116 Paris (FR)**

Jouve, 18, rue Saint-Denis, 75001 PARIS

EP 0 327 437 B1

**Description**

La présente invention concerne une cheville à expansion destinée à être introduite dans un trou d'ancrage, comprenant un ensemble d'expansion, pourvu de moyens d'appui sur le bord du trou, et une douille expansible, pourvue de moyens de passage des moyens d'appui et s'étendant au-delà de ceux-ci pour, sous l'action d'un outil de frappe, et l'ensemble d'expansion étant en appui sur le bord du trou hors duquel la douille fait saillie, être expansée par l'ensemble d'expansion.

Dans certains pays, les maisons sont montées avec une double maçonnerie, c'est-à-dire avec une paroi intérieure support, en briques ou en béton, et une paroi extérieure de parement, généralement en briques, les deux parois étant séparées par un espace d'isolation. Lors de la construction, on noye les deux extrémités de tiges de liaison métalliques respectivement dans les deux parois pour les solidariser l'une à l'autre. Or ces éléments de liaison sont attaqués par la rouille qui affecte la qualité de leur ancrage, si bien que la paroi extérieure de parement risque de tomber. Quand il n'est pas encore trop tard, il faut donc procéder au remplacement des tiges de liaison.

Le brevet américain 4633638 enseigne, outre la détection des tiges d'origine, l'enlèvement des briques de parement associées à ces tiges, l'enlèvement de ces tiges de la paroi intérieure, de forer dans la paroi intérieure, dans les zones des tiges d'origine, des orifices de réception de tiges de remplacement, de boucher ces orifices avec un mortier à base de résine époxy et de noyer dans les orifices ainsi bouchés les extrémités ondulées de nouvelles tiges de liaison, avant d'insérer leur autre extrémité dans un joint entre deux briques de la maçonnerie de parement, une ancienne et une nouvelle.

Ce procédé de remplacement de tiges de liaison est long et particulièrement coûteux.

La présente invention vise à proposer un élément de liaison pour double maçonnerie dont la mise en place, par exemple en remplacement d'un autre, soit plus simple que le procédé de l'art antérieur.

Le document EP-A-0166455 enseigne une cheville à expansion destinée à être introduite dans un trou d'ancrage, comprenant un ensemble d'expansion, pourvu de moyens d'appui sur le bord du trou, et une douille expansible, pourvue de moyens de passage des moyens d'appui et s'étendant au-delà de ceux-ci pour, sous l'action d'un outil de frappe, et l'ensemble d'expansion étant en appui sur le bord du trou hors duquel la douille fait saillie, être expansée par l'ensemble d'expansion.

On notera que l'outil servant à frapper la douille pour provoquer son expansion peut être un outil très simple et tout à fait classique.

C'est à partir de la cheville du document EP-A-0166455 que la demanderesse a eu l'idée de résoudre le problème posé dans le brevet américain 4633638. Elle a donc d'abord cherché à la modifier, en tant que telle, avant de l'adapter ensuite à l'application envisagée.

Ainsi, la présente invention concerne une cheville à expansion du type défini ci-dessus, caractérisée par le fait que l'ensemble d'expansion comporte un élément comprenant deux branches d'un fil replié sur lui-même, servant de guidage à la douille expansible conformée à cet effet, ainsi qu'un étrier d'expansion plat de forme trapézoïdale, disposé ente les deux branches du fil, perpendiculairement au plan général des branches, son fond étant en butée contre la zone de raccordement des branches de l'élément d'expansion.

La cheville de l'invention est particulièrement simple à fabriquer.

Dans la forme de réalisation préférée de la cheville de l'invention, donc pour son application aux doubles maçonneries, l'une des branches de l'élément d'expansion est prolongée au-delà de l'autre par une portion de tige de liaison avec une extrémité libre de scellement.

Avantageusement, lesdits moyens d'appui comprennent deux saillies opposées, formées respectivement sur les deux branches du fil, à la même distance de leur zone de raccordement, et une rondelle d'appui pour venir en butée contre les saillies.

De préférence, lesdits moyens de la douille pour le passage des saillies d'appui sont formées par des ouvertures latérales extérieures ménagées entre des jambes d'expansion et prolongées par des gorges, ouvertes latéralement vers l'extérieur, de réception des branches de guidage du fil d'expansion.

De préférence encore, la douille expansible est formée par un feuillard découpé et matricé, présentant une surface de butée radiale pour l'étrier d'expansion.

L'invention sera mieux comprise à l'aide de la description suivante de plusieurs formes de réalisation de la cheville de l'invention, en référence aux dessins annexés, sur lesquels

— la figure 1 est une vue en perspective du fil d'expansion à deux branches de la cheville de l'invention ;
— la figure 2 est une vue en perspective de l'étrier d'expansion de la cheville de l'invention ;
— la figure 3 est une vue en perspective d'une première forme de réalisation de la douille expansible de la cheville de l'invention ;
— la figure 4 est une vue latérale de la cheville de l'invention avec la douille de la figure 3 ;
— la figure 5 est une vue latérale de la cheville de la figure 4, tournée de 90° ;
— la figure 6 est une vue du feuillard de départ d'une deuxième forme de réalisation de la douille expansible de la cheville de l'invention ;

— la figure 7 est une vue en coupe axiale de la deuxième forme de réalisation de la douille expansible, et

— la figure 8 est une vue en bout, à plus grande échelle, de la douille des figures 6 et 7.

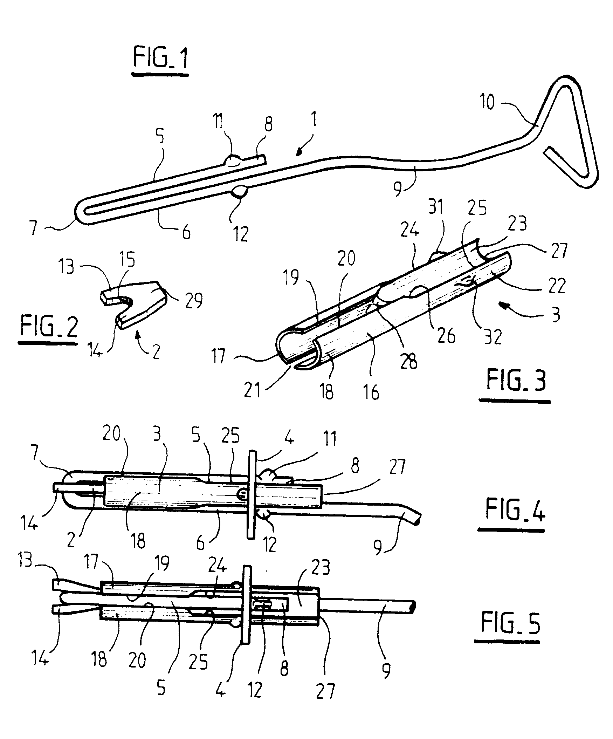

La cheville à expansion représentée sur les figures 1 à 5 comporte un ensemble d'expansion, comprenant un fil métallique replié sur lui-même 1 et un étrier plat 2, une douille expansible 3 et une rondelle d'appui 4. Le fil 1, replié en épingle à cheveux très légèrement élastique, comporte deux branches 5, 6, raccordées dans une zone coudée 7. La branche 6 est prolongée, au-delà de l'extrémité libre 8 de la branche 5, par une portion de tige de liaison 9 terminée par une extrémité de scellement 10. L'extrémité 10 a été obtenue par trois repliements de l'extrémité de la tige 9 suivant les côtés d'un triangle s'étendant ici dans un plan perpendiculaire à celui des branches 5, 6.

La portion de tige 9 est légèrement déformée dans sa partie médiane, avec une partie inclinée sur la direction générale du fil, pour légèrement déporter les deux extrémités 7, 10 l'une par rapport à l'autre.

Les branches 5, 6, d'une part, et l'extrémité de scellement 10, d'autre part, pourraient tout aussi bien s'étendre dans deux plans parallèles respectivement.

Les branches 5, 6 portent ici respectivement deux saillies 11, 12 tournées vers l'extérieur, à la même distance de la zone de raccordement 7, donc opposées l'une à l'autre, la saillie 11 se trouvant légèrement en-deça de l'extrémité 8 de la branche 5. Les saillies 11, 12 ont été formées par pinçage de la matière du fil. Les saillies 11, 12 sont des moyens d'appui de la cheville contre le bord d'un trou d'ancrage ; elles sont complétées dans leur fonction par une rondelle d'appui 4, destinée elle-même, après avoir été glissée sur le fil replié par son extrémité 7 à venir en appui contre les saillies.

L'étrier 2 est pourvu de deux branches 13, 14, légèrement divergentes depuis son fond intérieur 15, lui donnant une forme générale trapézoïdale.

La douille expansible 3, de forme générale cylindrique, comporte une portion antérieure 16 et une portion postérieure 22. La portion antérieure 16, en forme de manchon tubulaire fendue suivant un plan diamétral, est constituée de deux coquilles semi-cylindriques, ou jambes d'expansion, 17, 18, dont les bords respectifs en regard 19, 20, ménagent une ouverture latérale extérieure 21 de largeur sensiblement égale au diamètre du fil, sauf sans la zone 7, où, du fait du repliement et du léger fluage, son diamètre est très légèrement supérieur. L'ouverture circulaire ménagée par les extrémités libres des jambes 17, 18 a un diamètre légèrement plus grand que la largeur de la petite base postérieure 29 de l'étrier 2. La portion postérieure 22, sensiblement plus longue que la portion antérieure, comporte deux gorges latérales 23 diamétralement opposées selon le plan des ouvertures 21.

Les gorges 23 ont été creusées suivant une section circulaire de diamètre sensiblement plus grand que celui du fil 1, si bien que les deux bords 24, 25 de chaque gorge 23 sont plus écartés l'un de l'autre que ceux 19, 20 des ouvertures 21. Il en résulte des décrochements 26 dans la zone de jonction des deux portions 16, 22 de la douille. Les gorges 23 donnent à la portion postérieure 22 de la douille une section en forme de lettre I à contours incurvés, entre l'extrémité postérieure 27 et une surface de butée 28 s'étendant dans le plan transversal des décrochements 26.

Aux décrochements 26 près, les bords 19, 20 des ouvertures latérales ménagées entre les jambes d'expansion 17, 18 et les bords 24, 25 des gorges 23 sont respectivement dans le prolongement les uns des autres.

Ayant décrit les composants structurels de la cheville, son montage peut maintenant être abordé.

On introduit l'étrier 2 entre les branches 5, 6 du fil 1 et on le glisse vers la portion courbe de raccordement 7 jusqu'à ce que son fond 15 vienne en butée contre cette portion 7, les plans de l'étrier 2, d'une part, et des branches 5, 6, d'autre part, étant alors perpendiculaires, l'étrier 2 se trouvant à cheval sur la portion courbe 7.

On introduit la branche 6 et la partie adjacente de la portion de tige 9 à travers l'une des ouvertures 21 de la douille 3 et dans la gorge 23 la prolongeant, et on fait glisser la douille vers la zone 7 du fil. La branche 5 du fil pénètre progressivement, à travers l'autre ouverture 21, dans la gorge 23 associée. Guidée par les branches 5, 6 reçues dans les deux gorges 23, les ouvertures 21 et les gorges 23 ouvertes latéralement vers l'extérieur permettant le passage des saillies 11, 12, la douille 3 est déplacée jusqu'à ce que ses jambes 17, 18 viennent recouvrir la partie postérieure de l'étrier 2 et que les bords libres des jambes 17, 18 viennent en butée contre les bords latéraux opposés des branches 13, 14. Alors l'extrémité postérieure 27 de la douille 3 se situe au-delà des saillies 11, 12, et même de l'extrémité 8 de la branche 5. Les branches 5, 6, dans cette position, sortent latéralement et très légèrement des ouvertures 21 et des gorges 23 de la douille 3, l'ensemble présentant une section comparable à celle de l'ouverture intérieure de la rondelle d'appui 4. On passe ensuite la rondelle d'appui 4, par les extrémités libres des branches 13, 14 de l'étrier 2, autour des branches 5, 6 du fil 1 et des jambes 17, 18 de la douille, jusqu'à ce qu'elle vienne en butée contre les saillies 11, 12. La cheville est alors prête à être utilisée.

Ayant foré un trou dans un matériau récepteur, ici celui d'une maçonnerie support, on introduit dans le trou l'ensemble étrier-fil-douille, jusqu'à ce que la rondelle 4, en butée contre les saillies 11, 12, vienne en appui contre le bord du trou, l'extrémité arrière 27 de la douille 3 faisant saillie hors du trou. A l'aide d'un outil classique, tel qu'un marteau, on frappe sur la douille 3. Celle-ci glisse sur les branches 5, 6, immobilisées par la rondelle 4 et les saillies 11, 12 contre la maçonnerie, à travers la rondelle 4, et s'enfonce sur l'étrier 2 dont les branches divergentes 13, 14 écartent les jambes 17, 18 de la douille 3 qui ainsi s'ancre dans la paroi du trou. Si la tige de liaison 9 subit une traction vers l'extérieur, la partie arrière 29 de l'étrier 2 vient en butée contre la surface transversale 28 de la douille 3, et cette force de traction s'exerce alors sur toute la partie ancrée de la cheville qui avantageusement se transforme en une force de frottement sur la paroi du trou d'ancrage. Grâce au léger fluage dans la zone 7 du fil 1, la douille 3 est parfaitement guidée dans la dernière partie de sa course libre, juste avant le début de son expansion.

Il ne reste plus, ensuite, qu'à sceller l'extrémité 10 de la portion de liaison dans la maçonnerie de parement, entre deux briques, dans le joint de ces deux briques. C'est parce que le plan de ce joint et celui du trou d'ancrage ne se trouvent généralement pas au même niveau que la portion de tige 9 de liaison est déformée. Dans le cas contraire, soit on redéformera cette portion de tige pour la rendre rectiligne, soit on partira d'un fil d'expansion non déformé et juste replié sur lui-même.

Si on a, plus haut, parlé d'un ensemble d'expansion comportant le fil et l'étrier, c'est parce que, fonctionnellement, ces deux composants de la cheville sont solidaires l'un de l'autre et qu'ils pourraient parfaitement être formés d'une seule pièce. De même, seule l'une des branches pourrait être pourvue d'une saillie d'appui, bien que cette solution soit moins avantageuse que celle décrite ci-dessus.

Dans une autre forme de réalisation de la douille expansible de la cheville de l'invention, on part d'un feuillard, ou tôle, 50 de forme rectangulaire.

On découpe une petite portion rectangulaire, depuis la partie médiane d'un des petits côtés du rectangle 50, pour ménager deux languettes latérales rectangulaires identiques 51, 52, sensiblement moins longues que la moitié de la longueur du grand côté du rectangle 50. On prolonge le trait de coupe intérieur 53, parallèle au petit côté du rectangle 50, entre les deux languettes 51, 52, légèrement vers l'intérieur des languettes, des deux côtés, trait de coupe aux extrémités duquel on perce deux orifices 54 pour faciliter, tout comme les prolongements du trait de coupe 53, la conformation du feuillard ainsi découpé, comme décrit ci-dessous.

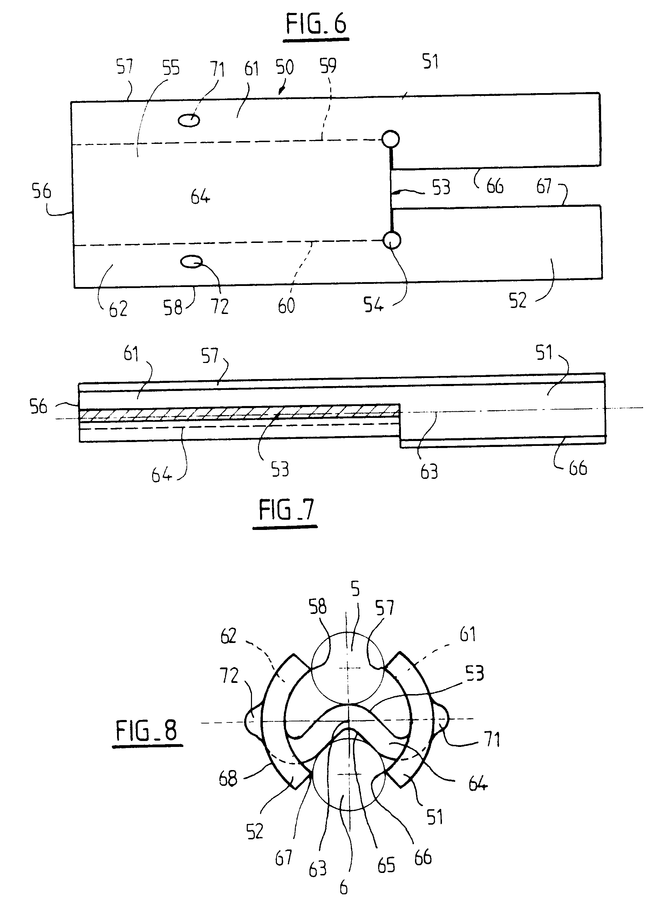

Le feuillard découpé comporte donc une portion rectangulaire 55, délimitée en partie par le petit côté 56 du rectangle 50 d'origine, non affecté par la formation des languettes et le trait de coupe prolongé 53, et les deux languettes 51, 52 la prolongeant. Sur un mandrin de matriçage approprié, on conforme le feuillard découpé pour que les languettes 51 et 52 et les bandes latérales 61, 62 de la portion 55 comprises entre les grands côtés 57, 58 de la portion 55 et les droites 59, 60, en tirets sur la figure 6, parallèles à ces côtés et passant par les orifices 54, enveloppe un cylindre droit de section circulaire d'axe 63, la partie centrale 64 de la portion 55 comprise entre les bandes 61 et 62 étant repoussée depuis la zone enveloppe du cylindre, vers cet axe 63 de manière à ce que celui-ci s'étende dans la partie médiane de cette partie 64. La section de la portion 55 après ce matriçage, a une forme voisine de celle de la lettre grecque minuscule ω, au point de rebroussement central étant toutefois substitué un secteur arrondi.

Fonctionnellement, la douille des figures 6-8 et celle de la figure 3 sont les mêmes. Les languettes 51, 52 ainsi conformées correspondent aux jambes d'expansion 18, 17. L'espace compris entre les bandes 61, 62 et la partie médiane 64, d'une part, et la rainure, ou gorge, 65 sous cet espace, c'est-à-dire sous le secteur arrondi de la partie 64, correspondent aux gorges 23. Le plan de coupe transversal 53 de la partie 64 correspond à la surface de butée 28. L'ouverture entre les deux bords 57, 58, dans la zone des jambes 51, 52, et l'ouverture entre les bords opposés 66, 67 de ces jambes correspondent aux ouvertures 21. Le plan contenant le côté 56 correspond à l'extrémité 27.

En conséquence, et pour le montage de la cheville avec la douille des figures 6-8, on introduit la branche 6 du fil entre les jambes 51, 52 dans la gorge 65 et on fait glisser la douille vers la zone 7 du fil. La branche 5 pénètre progressivement dans la gorge formée entre les bords 57, 58 et la partie 64. Guidée par les branches 5, 6 reçues dans les deux gorges, les ouvertures entre les bords 57, 58 et 66, 67 permettent le passage des saillies 11, 12, la douille est déplacée jusqu'à ce que ses jambes 51, 52 viennent recouvrir la partie postérieure de l'étrier 2 et que les bords libres des jambes 51, 52 viennent en butée contre les bords de l'étrier 2, l'extrémité postérieure, adjacente au côté 56, de la douille se situant au-delà des saillies 11, 12. Dans le cas de la douille des figures 6-8, les branches 5, 6, tout en restant dans le volume défini par l'enveloppe extérieure 68 de la douille, sortent latéralement et très légèrement des ouvertures, c'est-à-dire font saillie hors des plans des bords de ces ouvertures. L'ancrage de la cheville avec la douille des figures 6-8 s'effectue comme précédemment décrit.

On notera que la forme de la douille des figures 6 - 8 est préférée à celle de la figure 3, pour des raisons de facilité et de coût de réalisation.

Pour immobiliser les composants de la cheville avant expansion, on ménagera, sur la portion postérieure 22 de la douille 3 de la figure 3, deux saillies, ou bossages, 31, 32, diamétralement opposées sensiblement dans un plan orthogonal à celui des ouvertures 21. On ménagera, de même, sur les bandes 61, 62 du feuillard de la douille 50 des figures 6-8 des saillies analogues 71, 72 s'étendant, après matriçage sensiblement dans le plan diamétral orthogonal à celui des ouvertures entre les bords 57, 58 et 66, 67.

Le montage de la cheville s'effectue de la même manière si ce n'est qu'en forçant la rondelle d'appui 4 au passage des saillies. Une fois la cheville montée, la rondelle est en butée, d'un côté, contre les saillies de la tige et de l'autre côté, contre celles de la douille, si bien que ces trois pièces sont immobilisées les unes par rapport aux autres.

## Revendications

1. Cheville à expansion destinée à être introduite dans un trou d'ancrage, comprenant un ensemble d'expansion (1, 2), pourvu de moyens (11, 12) d'appui sur le bord du trou, et une douille expansible (3 ; 50) pourvue de moyens (21) de passage des moyens d'appui (11, 12) et s'étendant au-delà de ceux-ci pour, sous l'action d'un outil de frappe, et l'ensemble d'expansion étant en appui sur le bord du trou hors duquel la douille fait saillie, être expansée par l'ensemble d'expansion, cheville caractérisée par le fait que l'ensemble d'expansion comporte un élément comprenant deux branches (5, 6) d'un fil (1) replié sur lui-même, servant de guidage à la douille expansible (3 ; 50) conformée à cet effet, ainsi qu'un étrier d'expansion plat (2) de forme trapézoïdale, disposé entre les deux branches (5, 6) du fil, perpendiculairement au plan général des branches (5, 6), son fond (15) étant en butée contre la zone de raccordement (7) des branches (5, 6) de l'élément d'expansion.

2. Cheville selon la revendication 1, dans laquelle les moyens d'appui comprennent deux saillies (11, 12) opposées, formées respectivement sur les deux branches (5, 6) du fil, à la même distance de leur zone de raccordement (7).

3. Cheville selon la revendication 2, dans laquelle une rondelle d'appui (4) est en butée contre les saillies d'appui (11, 12).

4. Cheville selon l'une des revendications 1 à 3, dans laquelle lesdits moyens de la douille (3 ; 50) pour le passage des moyens d'appui (11, 12) comprennent des ouvertures latérales extérieures (21 ; 57, 58-66, 67) ménagées entre des jambes d'expansion (17, 18 ; 51, 52) et prolongées par des gorges (23 ; 65-61, 62, 64), ouvertes latéralement vers l'extérieur, de réception des branches de guidage (5, 6) des moyens d'expansion.

5. Cheville selon l'une des revendications 1 à 4, dans laquelle la douille (3 ; 50) comporte une surface transversale (28 ; 53) de butée pour l'étrier (2).

6. Cheville selon l'une des revendications 4 et 5, dans laquelle la douille expansible (50) a été formée par un feuillard (50) découpé et matricé.

7. Cheville selon la revendication 6, dans laquelle le feuillard (50) de départ, avec une partie rectangulaire (55) prolongée par deux jambes (51, 52) découpées, a été enveloppé autour d'un cylindre droit de section circulaire, la partie centrale (64) de la partie rectangulaire (55) ayant été repoussé vers l'axe (63) du cylindre.

8. Cheville selon l'une des revendications 1 à 7, dans laquelle l'une (6) des branches de l'élément d'expansion est prolongée au-delà de l'autre branche (5) par une portion (9) de tige de liaison pourvue d'une extrémité libre de scellement (10).

9. Cheville selon la revendication 3, dans laquelle la douille (3 ; 50) comporte des saillies d'immobilisation (31, 32 ; 71, 72), la rondelle (4) étant en butée, d'un côté, contre les saillies d'appui (11, 12), et, de l'autre côté, contre les saillies d'immobilisation (31, 32 ; 71, 72).

## Patentansprüche

1. Spreizdübel zur Einführung in ein Verankerungsloch, bestehend aus einer Spreizeinheit (1, 2), welche mit Mitteln (11, 12) zur Abstützung auf dem Lochrand versehen ist, und aus einer aufspreizbaren Hülse (3 ; 50), welche mit Mitteln (21) zum Durchgang der Abstützungsmittel (11, 12) versehen ist und über diese hinausragt, um unter Einwirkung eines Schlagwerkzeuges, wobei die Spreizeinheit auf dem Rand des Loches aufliegt, aus welchem die Hülse herausragt, durch die Spreizeinheit aufgespreizt zu werden, Dübel dadurch gekennzeichnet, daß die Spreizeinheit ein Element umfaßt, das zwei Armen (5, 6) aus umgebogenen Draht (1) aufweist und als führung für die zu diesem Zweck geformte aufspreizbare Hülse (3 ; 50) dient, sowie einen zwischen den beiden Drahtarmen (5, 6) senkrecht zur Ebene der Arme (5, 6) angeordneten trapezförmigen Flachspreizbügel (2), dessen Boden (15) an der Verbindungszone (7) der Arme (5, 6) des Spreizelementes anliegt.

2. Dübel gemäß Anspruch 1, bei welchem die Abstützungsmittel zwei gegenüberliegende Vorsprünge (11, 12) umfassen, die auf die beiden Drahtarme (5, 6) im gleichen Abstand zu deren Verbindungszone (7) aufgeformt sind.

3. Dübel gemäß Anspruch 2, bei welchem eine Stützscheibe (4) an den Abstützungsvorsprüngen (11, 12) anliegt.

4. Dübel gemäß einem der Ansprüche 1 bis 3, bei welchem die genannten Mittel der Hülse (3 ; 50) zum Durchgang der Abstützungsmittel (11, 12) seitliche Außenöffnungen (21 ; 57, 58-66, 67) aufweisen, welche zwischen Spreizschenkeln (17, 18 ; 51, 52) eingebracht und durch Kehlen (23 ; 65-61, 62, 64) verlängert sind, die seitlich nach außen hin offen sind und zur Aufnahme der Führungsarme (5, 6) der Spreizmittel dienen.

5. Dübel gemäß einem der Ansprüche 1 bis 4, bei welchem die Hülse (3 ; 50) eine Querfläche (28 ; 53) als Anlage für den Bügel (2) aufweist.

6. Dübel gemäß einem der Ansprüche 4 und 5, bei welchem die aufspreizbare Hülse (50) aus gestanztem und geprägtem Bandmaterial (50) geformt ist.

7. Dübel gemäß Anspruch 6, bei welchem das Ausgangsbandmaterial (50) mit einem durch zwei ausgestanzte Schenkel (51, 52) verlängerten rechteckigen Teil (55) um einen geraden Zylinder mit kreisförmigem Querschnitt gewickelt wurde, wobei der Mittelteil (64) des rechteckigen Teils (55) gegen die Zylinderachse (63) zurückgedrückt wurde.

8. Dübel gemäß einem der Ansprüche 1 bis 7, bei welchem einer (6) der Schenkel des Spreizelementes über den anderen Schenkel (5) hinaus durch ein Stück (9) einer Verbindungsstange mit einem freien Befestigungende (10) verlängert wurde.

9. Dübel gemäß Anspruch 3, bei welchem die Hülse (3 ; 50) Blockierungsvorsprünge (31, 32 ; 71, 72) aufweist, wobei die Scheibe (4) einerseits an den Abstützungsvorsprüngen (11, 12) und andererseits an den Blockierungsvorsprüngen (31, 32 ; 71, 72) anliegt.

## Claims

1. Expansion plug intended to be inserted in an anchorage hole, comprising an expansion assembly (1, 2) provided with means (11, 12) for abutment on the edge of the hole and an expandable socket (3 ; 50) provided with passage means (21) for the abutment means (11, 12) and extending beyond these latter so as to be expanded by the expansion assembly under the action of a striking tool, with the expansion assembly in abutment on the edge of the hole out of which the socket projects, plug characterized by the fact that the expansion assembly includes an element comprising two branches (5, 6) of a wire (1) bent on itself, serving for guiding the expandable socket (3 ; 50) shaped for this purpose as well as a flat expansion stirrup-piece (2), of trapezoidal shape, disposed between the two branches (5, 6) of the wire, perpendicularly to the general plane of the branches (5, 6), its bottom (15) being in abutment against the connection zone (7) of the branches (5, 6) of the expansion element.

2. Plug according to claim 1, wherein the abutment means include two opposite projections (11, 12) formed respectively on the two branches (5, 6) of the wire, at the same distance from their connection zone (7).

3. Plug according to claim 2, wherein an abutment washer (4) is in abutment against the abutment projections (11, 12).

4. Plug according to one of claims 1 to 3, wherein said means of the socket (3 ; 50) for passing the abutment means (11, 12) include external lateral openings (21 ; 57, 58-66, 67) provided between expansion legs (17, 18 ; 51, 52) and extended by grooves (23 ; 65-61, 62, 64), open laterally outwardly, for receiving the guiding branches (5, 6) of the expansion means.

5. Plug according to one of claims 1 to 4, wherein the socket (3 ; 50) has a transverse surface (28 ; 53) for abutment of the stirrup-piece (2).

6. Plug according to one of claims 4 and 5, wherein the exapandable socket (50) is formed from a cut and stamped metal sheet (50).

7. Plug according to claim 6, wherein the starting metal sheet (50), with a rectangular part (55) extended by two cut legs (51, 52), is enveloped about a right cylinder of circular section, the central part (64) of the rectangular part (55) being pushed back towards the axis (63) of the cylinder.

8. Plug according to one of claims 1 to 7, wherein one (6) of the branches of the expansion element is extended beyond the other branch (5) by a portion (9) of a connection shaft having a free sealing end (10).

9. Plug according to claim 3, wherein the socket (3 ; 50) has blocking projections (31, 32 ; 71, 72), the washer (4) being in abutment on one side against the abutment projections (11, 12) and on the other against the blocking projections (31, 32 ; 71, 72).

FIG.1

FIG.2

FIG.3

FIG.4

FIG.5

FIG. 6

FIG. 7

FIG. 8